# EUROPEAN PATENT APPLICATION

(11) **EP 0 581 376 A1**
(43) Date of publication of application: **02.02.1994**
(21) Application number: 93202172.8
(22) Date of filing: 22.07.1993
(51) Int. Cl.: H01J 61/30, H01J 9/26

(54) **Gas discharge lamps and method for fabricating same by micromachining technology**

(30) Priority: 28.07.1992 US 922707
(71) Applicant: Philips Electronics N.V., 5621 BA Eindhoven (NL)
(72) Inventor: Khan, Babar Ali, NL-5656 AA Eindhoven (NL); Cammack, David Alan, NL-5656 AA Eindhoven (NL); Pinker, Ronald, NL-5656 AA Eindhoven (NL); Taskar, Nikhil Ramesh, NL-5656 AA Eindhoven (NL)
(74) Representative: Rooda, Hans

(57) **Abstract**

A high pressure gas discharge lamp and the method of making same utilizing integrated circuit fabrication techniques. The lamp is manufactured from heat and pressure resistant planar substrates (14,12) in which cavities (20,22) are etched, by integrated circuit manufacturing techniques, so as to provide a cavity forming the gas discharge tube. Electrodes (40,42) are deposited in the cavity. The cavity is filled with gas discharge materials such as mercury vapor, sodium vapor or metal halide. The substrates are wafer bonded together and channels (46) may be etched in the substrate so as to provide a means for connection to the electrodes. Electrodeless RF activated lamps may also be fabricated by this technique. Micro-lasers may also be fabricated by this technique as well.

## Description

### BACKGROUND AND SUMMARY OF THE INVENTION

A gas discharge lamp and methodology for producing such lamps, having first and second substrates of transparent material capable of withstanding heat and pressure; at least one of the substrates has at least one cavity; luminescent gas discharge material is placed in the cavity; the first and second substrates are wafer bonded together such that the substrates are joined together at all points of contact.

Gas discharge lamps (mercury vapor, sodium vapor, metal halide) are an important segment of the lighting industry. It is well known that the luminous efficiency of gas discharge bulbs increases substantially at high pressures (1-200 atmospheres). However, the containment of such high pressures in a transparent vessel has presented significant problems. Gas pressure is restricted in many instances because of the difficulty of finding materials that are sufficiently lightweight, while at the same time capable of withstanding high heat and pressures. Furthermore, such materials, to be practicable, must be capable of relatively inexpensive mass production. The usual construction of gas discharge lamps is to suspend a transparent pressure and heat resistant discharge tube by means of a metal framework within an outer glass bulb.

The present invention provides an entirely new paradigm for the construction of high pressure gas discharge lamps. Rather than a discharge tube mechanically suspended within an outer bulb, the present invention is directed towards methods of fabricating high pressure "microlamps" utilizing micromachining techniques which are similar to integrated circuit fabrication techniques such as the etching of and boding of planar substrates. The present invention is directed to an improved gas discharge lamp that can withstand very high pressures and the method of making such a lamp by means of integrated circuit manufacturing techniques. The lamp is manufactured from two planar sheets of temperature and pressure resistant transparent material. A cavity is etched in one or both of the sheets and electrodes are therefore deposited in the cavity. The cavity is charged with a filler appropriate to the type of lamp being manufactured such as mercury, sodium or metal halides. The two sheets are then bonded together so as to seal the cavity within the sheets. Contact may then be made with the electrodes to activate the lamp. Electrodeless lamps activated by radio frequency energy may also be manufactured by this technique. Miniature gas discharge lasers may also be produced by this technique.

The term "bonding" as used herein refers to "wafer bonding" techniques used in the manufacture of integrated circuits and sensors. Such techniques generally comprise anodic or fusion bonding which results in a chemical bond at the interface which is as strong as the bulk material. This bond permits the fabrication of cavities which can withstand extremely high pressures (greater than 200 atmospheres). In this technique, a bond is present at all points of contact between the substrate surfaces. So that each cavity is individually sealed.

There are two types of wafer bonding processes. Anodic wafer bonding or fusion wafer bonding. Fusion wafer bonding: In this process two flat wafers (e.g. quartz) are prepared with hydrophilic surfaces and brought into contact. The Van de Waal's forces pull the two wafers together and result in a bond at the interface. The two wafers are then annealed at high temperature (e.g. 1000° C), resulting in a chemical bond at the interface, which has the strength of the bulk material. Even though the temperature is elevated, bonding takes place at a temperature below that of melting point of the material quartz: approximately 1400°C. This means that the substrate will not deform during the bonding process. Anodic wafer bonding: In this process, two flat wafers are brought into contact as in the fusion wafer bonding process. However, the annealing is carried out at lower temperatures and with an electric field applied across the wafers. This process is useful for materials that have mobile ions and cannot be annealed at high temperatures (such as glass). The electric field results in the collection of positive and negative charges at the interface, which lead to high electric fields, which pull the wafers together. This process is more forgiving of the degree of wafer flatness, but is more difficult to implement and does not work with materials that are free of mobile ions.

Conventional plasma displays or back-lights (such as shown in Patent Publication WO 90/09676, WO 87/04562, EP 0,302,748 and EP 0,467,542 A2) are made by sealing the glass plates at the edges using glass frit and keeping them apart either with spacers or by etching pillars. This creates a large cavity which must be kept below one atmosphere and is therefore only good for creating low pressure discharges. The restriction on pressure follows from the fact that if the pressure exceeds atmospheric pressure even by 1 psi, there will be 100 lbs of pressure on a (10x10") plate and the structure will fall apart. This pressure restriction rules out high pressure arc lamps such as mercury or metal halide fabricated by frit sealing. The present development has implications for fluorescent lamps as well. Fluorescent lamps fabricated by using wafer bonding will not only be much sturdier, but the internal pressures can exceed 1 atmosphere. This is because flat fluorescent lamps made by the present technology will be bonded everywhere, except where the discharge space is located. As noted above, this bond will have the strength of the bulk material. This allows the lamp to be optimized in a sub-normal "glow" discharge mode, where the optimum pressure for the discharge can exceed 1 atmosphere for short electrode spacing or narrow walls. Moreover, the two approaches are physically very different. The glass frit sealing (at the edges) in the prior art is a mechanical process, which cannot easily be used to make small individually sealed cavities (e.g. 100 micron diameter) and which is not a batch production process. On the other hand, the wafer bonding process can be used with IC techniques to make extremely small individually sealed cavities (< 100 micron diameter) and is a batch process which is fully compatible with IC techniques.

U.S. Patent No. 4,990,826 is directed to a display device. In this patent, channels are formed by etching through one plate and placing it in contact with two plates on which electrodes have been formed. The three plates are then sealed together by heating. Because of the electrodes, the seal can only be formed by softening the glass so it can flow around the metal electrode and form a seal. Such heating may unacceptably deform the entire structure. On the other hand, the present invention uses wafer bonding to form the sealed cavities. In U.S. Patent No. 4,990,826, a vacuum port is also sealed into the device with glass frit. The discharge space is evacuated and filled through this port and then sealed by melting the pumping port tube.

The discharge space in the present invention is formed by wafer bonding two or more plates together. In the present electroded lamps, the electrodes are sealed and the surface of the wafer is planarized by using wafer planarizing methods to deposit glass or SiO₂ films. The planar wafers are then bonded together to seal the discharge space. Since the wafer bonding is carried out in the atmosphere required in the discharge space (e.g. Ar, Ne, Xe, etc.), the atmosphere is sealed into the cavity and a port is not required. Therefore, the present process allows the formation of many individually sealed cavities on one substrate, whereas the process described in U.S. Patent No. 4,990,826 does not. The present process has the advantages of batch processing whereas the prior art does not. The formation of a seal by wafer bonding also has practical advantages over glass softening, in that the structure will not deform during wafer bonding but surely will during softening of the glass in U.S. Patent No. 4,990,826.

### BRIEF DESCRIPTION OF THE DRAWINGS

For better understanding of the invention, reference is made to the following drawings which are to be taken in conjunction with the detailed description to follow:
Figure 1 is a sectional diagram of an electrodeless, radio frequency activated lamp constructed in accordance with the present invention;
Figure 2 is a plan view of the transparent substrates having a plurality of lamp cavities disposed therein;
Figure 3 is a sectional view of a lamp having opposed electrodes manufactured in accordance with the present invention;
Figure 4 is a sectional view of a side electrode lamp manufactured in accordance with the present invention; and
Figure 5 is a sectional view of a further embodiment of a side electrode lamp constructed in accordance with the present invention.
Figure 6 is a sectional view of a side electrode lamp including melt zones to further seal the electrodes; and
Figures 7 and 8 are selectional views of micro-lasers constructed in accordance with the invention.

### DETAILED DESCRIPTION OF THE PREFERRED EMBODIMENT

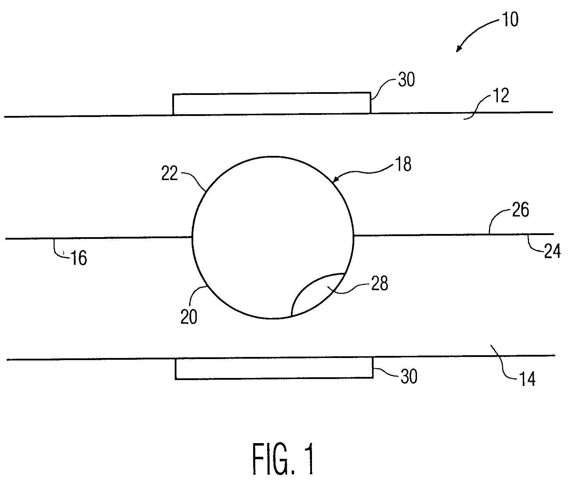

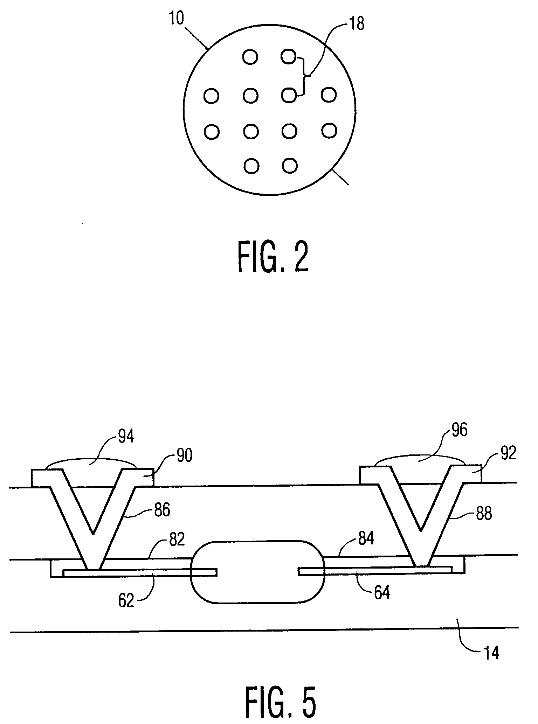

Figures 1 and 2 illustrate a high pressure lamp fabricated in accordance with the present invention. As shown in Figures 1 and 2, a lamp 10 is fabricated from a first planar substrate 12 and a second planar substrate 14 which are bonded together by suitable means, as described below, and each lamp 10 comprises a plurality of cavities 18 which form individual luminescent micro-lamps. In Figures 1 and 2, the cavities 18 are depicted as generally spherical and the substrates 12 and 14 are depicted as circular in plan view. It should be kept in mind that the cavities and substrates may be of any size and shape. The substrates are depicted as circular since handling equipment for circular plates is readily available from makers of integrated circuit manufacturing equipment. Cavities 18 may be square, rectangular or elongated channels.

Figure 1 illustrates a lamp constructed in accordance with the present invention in its simplest embodiment, that of an electrodeless RF activated lamp. The steps of manufacturing the lamp will also be discerned from this figure. Planar substrate 14 is transparent and consists of material suitable for containing the pressure and temperature of an operating lamp, one such suitable material is quartz. Cavity 18 which comprises a half cavity 20 in substrate 14 and a half cavity 22 in substrate 12 is formed by integrated circuit manufacturing techniques.

The upper surface 24 of un-etched substrate 14 is covered by suitable masking material, such as polysilicon, at the portions where etching is not desired, as etching will occur at the unmasked portions. Thereafter, the masked substrate is exposed to an etchant such as hydrofluoric acid for a time suitable to create cavity 20. The time and amount of exposure to the etchant may be adjusted, in the known manner, to provide the cavity size and shape desired. Upper substrate 12 is therefore masked and etched in a similar manner to provide half cavity 22. For most applications, substrate materials are commonly available with sufficient flatness (so-called 10 micron flatness) such that they will bond by Van de Waal attraction. However, for certain bonding processes, it is desirable that the surfaces of substrates 12, 14 that are to be bonded together be planarized. This can be accomplished by depositing phosphorus doped silicon dioxide and polishing the surface. Alternatively a smooth surface can be obtained by depositing phosphorous doped silicon dioxide and reflowing (heating) it.

After the formation of cavities 20 and 22 in substrates 12 and 14, respectively, cavity 20 is charged with a suitable luminescent material. In this embodiment, the lamp is a mercury lamp so that an appropriate sized drop of mercury 28 is placed in cavity 20. If cavity 18 is to be charged with a gas such as Argon, the bonding of substrates 12, 14 may take place in an argon atmosphere at a pressure suitable for the final lamp. Accordingly, substrates 12 and 14 are placed in a pressure vessel at the appropriate argon pressure for the lamp to be manufactured. Thereafter, lower surface 26 of substrate 12 is bonded to upper surface 24 of substrate 14. The bonding interface 16 may be formed by any suitable means such as fusion or anodic bonding (as described above). After the bonding is completed, the completed lamp 10 is removed from the pressure vessel and cavity 18 will contain an argon atmosphere having a charge of mercury that will vaporize and form a mercury vapor lamp upon energization. Since this is an "electrodeless lamp", the mercury is vaporized and luminesces by application of RF energy from external RF electrodes 30. By the use of the wafer bonding process, each cavity 18 is individually scaled, that is, the substrates are chemically bonded to each other at all points of contact between the substrates.

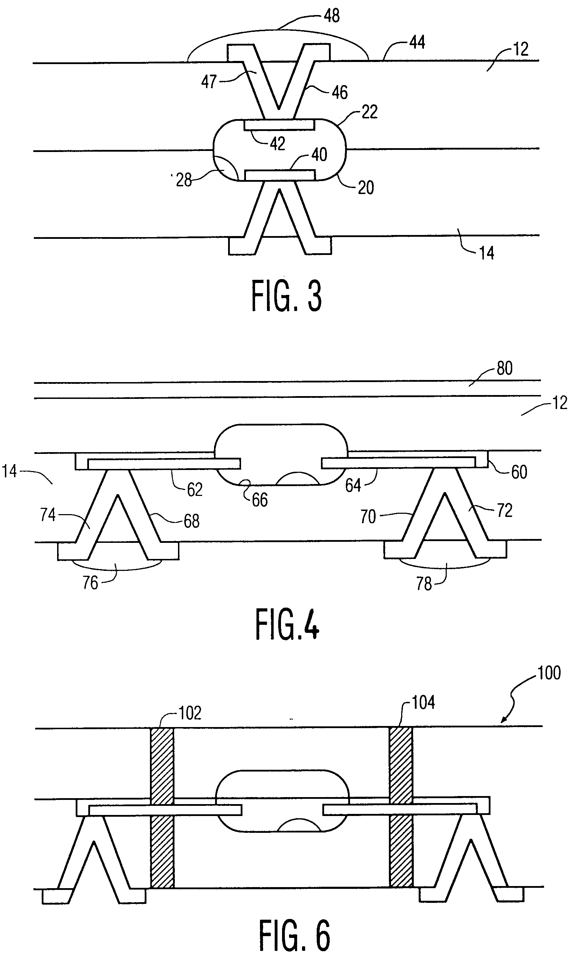

Figure 3 illustrates how the present invention is used to produce a lamp having electrodes which is a more common design that the RF lamp of Figure 1. In Figure 3, the same reference numerals are used to indicate the same structure that of Figure 1. In Figure 3, each half cavity 20, 22 in substrates 14, 12 is produced by masking and etching in a similar manner as the lamp of Figure 1. After the etching of the half cavities 20, 22 a further manufacturing step takes place: the deposition of electrodes 40 and 42 in cavities 20, 22 respectively. The electrodes may be composed of any suitable electrode material, such as tungsten, and are deposited by known metal deposition processes, *i.e.* masking, etching and deposition of material. Since electrodes 40, 42 must be connected to current, electrical connection must be made to electrodes 40, 42. Connection with electrode 42 is made by etching a channel 46 in the upper surface 44 of substrate 12. In this case, upper surface 44 is masked at the areas to remain unetched and an etchant acts on the unmasked portions to etch channel 46 into surface 44 down to the electrode 42 to expose its rear surface. Thereafter, by deposition and patterning, a coating of conductive material 47, which may be a metallic or non-metallic conductor is applied in channel 46. Coating 47 extends from the electrode 40, 42 to the outer surface of the respective substrates. In order to maintain the pressure integrity of cavity 18, "plug" material 48 such as glass is deposited over metal layer 46 to strengthen cavity 18 and to render the outer substrate surfaces flush. Thereafter, substrates 12, 14 are charged with the appropriate luminescent material and bonded as is described above with respect to the lamp of Figure 2. Connection of electrodes 40, 42 to an appropriate source of current will cause the lamp to illuminate. Additional pairs of electrodes, such as starter electrodes, may also be deposited and connected in a like manner.

Figure 4 illustrates another embodiment of the present invention in which the electrodes are disposed in side-by-side relationship, the same reference numerals are again used to denote similar structure. As shown in Figure 4, the upper substrate 12 is formed in a similar manner to the previous embodiments. However, lower substrate 14 is first masked and etched so as to form a relatively wide rectangular cavity 60 and electrodes 62, 64 are deposited on its flat lower surface. A second deeper central cavity 66 is then etched into substrate 14 by suitable masking and etching techniques, and by use of an etchant which does not attack the material of electrodes 62, 64. These electrodes will overhang cavity 66. Thereafter, the lower surface of substrate 14 is etched to create channels 68, 70 which contact the lower surface of electrodes 64, 62 respectively. A conductive layer 72, 74 may then be deposited in channel 68, 74 for electrical connection to electrode 64, 62. Thereafter, plug material 76, 78 may be used to fill in the gap between the lower surface of substrate 14 and metallic layers 72, 74. The cavity 18 is then charged. The lower surface of substrate 12 is then bonded to substrate 14 in the manner described above.

The present structure and methodology also lends itself to the manufacture of miniature fluorescent bulbs which utilize a phosphor coating which, when energized by the ultraviolet rays generated by mercury vapor, will fluoresce. In Figure 4, the phosphor layer is deposited on the upper surface of substrate 12. The lamp shown in Figure 4 has both electrodes disposed in a single substrate and the electrical connections are made on a single substrate. It is also noted that in the construction of this type of lamp, there need not be a cavity 22 disposed in substrate 12 because if cavity 60 is large enough, upper substrate 12 may be merely a flat piece of quartz or glass.

Figure 5 shows yet another variant of the side electrode lamp of Figure 4. In the lamp shown in Figure 5, the lower substrate 14 further includes deposition of layers 82,84 of P-glass (phosphorus doped glass) which cover electrodes 62 64- to a level equal to the upper surface of substrate 14. Thereafter, the upper substrate 12 has channels 86, 88 etched through substrate 12 and through the P-glass layers 82, 84 so as to expose the upper surface of electrodes 62, 64.
Thereafter, conductive layers 90, 92 and plug material 94, 96 are deposited in channels 86 and 88. This arrangement permits contact with and connection to electrodes 62, 64 through the upper surface of the device rather than the lower surface of the device as shown in Figure 4. The use of P-glass also provides an efficient scaling of the electrodes to the substrate.

Figure 6 illustrates a side electrode lamp 100 which is constructed similar to that of Figure 4 with the addition of melt ones 102, 104 which are used to further seal the electrodes within the substrates. Melt zones 102, 104 are formed by exposing the completed lamp to a CO₂ laser which will melt the quartz substrates to seal the tungsten electrodes firmly therewithin. Additionally, a layer of molybdenum may be added to the tungsten electrodes to aid in sealing. The molybdenum layer will assist the substrate/electrode seal with or without melt zones 102, 104.

As noted above, lamps fabricated by this methodology may be any type of gas discharge lamp. The material suitable for the substrates is also not required to be quartz as any transparent material capable of withstanding the heat and pressure that may be used. In certain circumstances, glass is a suitable substrate for use with the certain types of lamps. The number of cavities disposed in the substrate may be varied in accordance with the requirements of the application. The lamps may be used as illumination or as display. Finally, the lamps can be energized all at once or circuitry can be disposed on the substrate so as to provide non-simultaneous activation of the various microlamps disclosed in the substrate.

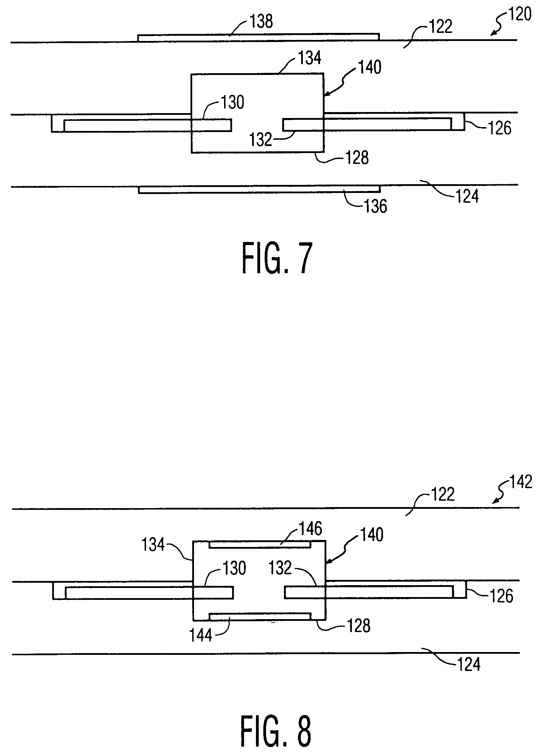

Figure 7 illustrates a micro-laser constructed in accordance with the invention. Micro-laser 120 is constructed, as are the previous gas discharge lamps, from an upper substrate 122 and a lower substrate 124. Lower substrate 124 has a first, relatively shallow channel 126 disposed thereon and a second deeper channel 128 at its centermost portion. By etching and deposition techniques similar or identical to those described above extending into channel 128 are first and second electrodes 130, 132. Similarly upper substrate 122 has a channel 134 formed therein. Mounted to the exterior of substrate 124 is a partially reflective mirror 136 formed by metal deposition, photolithographic techniques and etching. Disposed on the upper substrate 122 is a fully reflective mirror 138. A central cavity 140 is formed by the half cavities 128, 134 and may be charged with gaseous material which will lase under application of electrical input applied on electrodes 132, 130.

When a discharge is crated within cavity 140 the action of mirrors 136 and 138 will provide a lasing action such as to cause the atoms of the gaseous material to lase as is known to those skilled in the art of gas discharge lasers. Thus, partially reflective mirror 136 and fully reflective mirror 138 form an optical cavity for the excitation of atoms of the gaseous fill material. Suitable gaseous fill material are those usually utilized in large size gas discharge lasers.

Such material includes CO₂, Helium-Neon, Argon and the like. By suitable selection of the gaseous material and by the size and properties of the optical cavity, the lasing frequency may be adjusted over a wide frequency range. Such frequencies can range from the infrared to the ultraviolet. Gas discharge lasers are capable of generating light of a blue frequency or higher which, at this date, are difficult for solid state devices. Micro-lasers constructed in accordance with this invention can also be "electrodeless". Such lasers can be pumped through the application of external RF or microwave energy.

Figure 8 shows another embodiment of a micro-laser constructed in accordance with the present invention. In Figure 8 the same reference numerals are used to indicate the same structure as that of Figure 7. In the laser structure of Figure 7, mirrors 136 and 138 were disposed external to the substrates. The present invention does not require that the mirrors be disposed externally of the optical cavity. Figure 8 illustrates a laser structure including mirrors disposed in cavity 140. In Figure 8 a partially reflective mirror 144 is disposed on the lower surface of cavity 128 in lower substrate 124. A fully reflective mirror 146 is disposed on the upper surface of cavity 134 in upper substrate 122. The mirrors used in the structures of Figure 7 and Figure 8 may also be constructed from metallic materials which may be deposited within the substrates. It is to be further noted that the mirrors utilized in construction with the micro-lasers of Figure 7 and Figure 8 need not have planar surfaces. The mirror surfaces could be curved in accordance with any special requirements. Furthermore, the mirrors can be spaced apart from the substrates and need not be mounted thereto. A particularly suitable substrate material for use in a laser device is sapphire. Since sapphire is crystalline anisotropic etching can provide mirrors with superior optical qualities.

The above described structures and methodology are merely illustrative of the principles of the present invention. Numerous modifications ad adaptations thereof will be readily apparent to those skilled in the art without departing from the spirit and scope of the present invention and the appended Claims.

## Claims

1. A method for fabricating a gas discharge lamp having the steps of: providing a first and second substrate of transparent material capable of withstanding heat and pressure; etching a cavity in at least one of said substrates; filling the cavity with gas discharge material that will luminesce when activated; and characterized in that it includes wafer bonding said first and second substrates together such that all points of surface contact between the substrates are bonded to seal said cavity.

2. The method as claimed in Claim 1, characterized in that it includes the step of depositing a electrode in at least one of said cavities before said cavity is filled and wafer bonded.

3. The method as claimed in Claim 2, characterized in that it includes the step of etching a channel into an outer surface at said substrate containing said electrode so as to expose a surface of said electrode.

4. The method as claimed in Claim 3, characterized in that it includes the step of depositing a conductive layer into said channel in said substrate to form an electrical contact with said electrode.

5. The method as claimed in Claim 4, characterized in that it includes the step of filling the channel in the outer surface with material so as to maintain pressure integrity of the cavity.

6. The method as claimed in Claim 1, wherein said bonding step is anodic or fusion bonding.

7. A gas discharge lamp having first and second substrates of transparent material capable of withstanding heat and pressure; at least one of said substrates having at least one cavity disposed therein; luminescent gas discharge material disposed in said cavity; characterized in that said first and second substrates are wafer bonded together such that said substrates are jointed together at all points of contact.

8. The gas discharge lamp as claimed in Claim 7, characterized in that at least one electrode is disposed in said at least one cavity.

9. The lamp as claimed in Claim 8, characterized in that electrically conductive means extend through at least one of said substrates for electrical connection with said at least one electrode.

10. The gas discharge lamp as claimed in Claim 9, characterized in that channels are disposed in at least one of said substrates through which said electrically conductive means extend.

11. The gas discharge lamp as claimed in Claim 7, characterized in that a phosphor layer is disposed on the surface of at least one of said substrates.

12. The gas discharge lamp as claimed in Claim 7, characterized in that first and second at least partially reflective mirrors are disposed within said cavity so as to form a laser.

13. The gas discharge lamp characterized in that it includes multiple cavities.
